# EUROPEAN PATENT APPLICATION

(11) **EP 4 495 174 A1**
(43) Date of publication of application: **22.01.2025**
(21) Application number: 23186199.8
(22) Date of filing: 18.07.2023
(51) Int. Cl.: C08K 3/22, C08K 3/08, C08K 3/28, C08K 3/38, C08K 9/06, C09J 171/00

(54) **THERMALLY CONDUCTIVE CHEMICALLY CURABLE COMPOSITION**

(71) Applicant: Sika Technology AG, 6340 Baar (CH)
(72) Inventor: MENNECKE, Klaas, 79807 Lottstetten (DE)
(74) Representative: Sika Patent Attorneys

(57) **Abstract**

The invention relates to a chemically curable composition, comprising
- at least one chemically curable matrix;
- more than 70 wt.-%, based on the total composition, of at least one thermally conductive filler;
- optionally additives, in particular selected from curing catalysts, accelerators, plasticizers, organosilanes, stabilizers, and colorants;
characterized in that said thermally conductive filler is surface-coated by silanzation using a mixture of at least one organosilane OS1 according to R¹-Si(OR³)₃ and at least one organosilane OS2 according to R²-Si(OR³)₃, wherein R¹ is a linear or branched C2 to C20 alkyl or alkenyl group optionally having cyclic and/or aromatic moieties, and wherein R² is a polyether group, and wherein R³ is a methyl or ethyl group, with the provisio that the mass ratio of organosilane OS1 and organosilane OS2 employed for the surface silanization coating is between 1:2 and 2:1, preferably between 1:1.5 and 1.5:1, in particular between 1:1.1 and 1.1:1.

The chemically curable composition shows low viscosity and improved applicability alongside with exceptionally high filler levels and thus excellent thermal conductivity and is particularly suitable as adhesive, gap filler, or sealant suitable for e-coat applications and battery bonding especially in electric automobile battery assembly.

## Description

### Technical field

The invention relates to thermally conductive chemically curable compositions, and their use as adhesives, sealants, coatings, gap fillers or potting resins.

### State of the art

Curable compositions, mainly based on polymers or resins containing reactive groups or on reactive, polymerizable monomers, play an important role in many industrial applications, for example as adhesives, sealants, coatings, or potting resins. Such compositions chemically cure to cross-linked plastics with a broad possible range of mechanical, chemical, and physical properties. Such chemically curing compositions can be formulated as one-component, ready-to-use compositions by employing reactive matrices that only cure when exposed to external influences, such as heat or humidity, in order to ensure sufficient storage stability inside their package prior to use. Another possibility is to use multi-component compositions (in most cases two-component compositions) that are mixed with each other right before or during application.

The latter allows for more reactive systems with spontaneous, often much more rapid curing and they commonly do not require any external influences, but cure spontaneously once mixed and applied. Due to their faster and more controlled curing behavior, two-component compositions are preferred in industrial applications, as they allow for higher process control and shorter production cycles. Also, highly skilled industrial applicators or automatic application equipment do not require the benefit of an easy, fail-safe application a one-component composition better provides.

Known and broadly used chemically curable compositions are for example two-component epoxy resin adhesives, curable compositions based on silane-functional polymers, room temperature-vulcanizing (RTV) silicone compositions, (meth)acrylate compositions, polyurethane compositions, and more recently also hybrids of these compositions, for example dual cure systems based on silane-functional polymers and epoxy resins, as disclosed in EP 0 186 191 and EP 0 370 464, for example.

With the increasing use of batteries and electronic equipment nowadays, the demand for suitable adhesives, sealants, gap fillers, and potting resins that are in contact with these electronic elements or devices has risen significantly.

Especially in electric automobile assembly, large batteries and a multitude of electronic parts require large amounts of such sealants and adhesives that cover, seal, or bond electronics and batteries directly or that fill cavities within their assembly to improve thermal management or mechanical stability. A particular requirement for these materials is a high heat conductivity, since batteries and electronics generate significant amounts of heat while operating that must be dissipated efficiently to prevent detrimental heat accumulation on the batteries and electronic parts. This aspect has proven to be a severe problem for traditionally used curable compositions, e.g., based on silane-functional polymers or epoxy resins. Commonly known such compositions possess a poor heat conductivity and rather act as thermal insulators than efficient heat conductors. In order to impart the required thermal conductivity, large amounts of thermally conductive fillers must be included in the compositions, typically amounts of at least 70% by weight of the total composition.

One significant problem that arises with such high filler levels is the significant increase of viscosity of such highly filled compositions, which makes mixing and application of the uncured liquid or pasty composition, especially using pumps, very demanding.

Most commonly used thermally conductive fillers include finely ground or precipitated particles of metal oxides and metal hydroxides, in particular aluminium oxide and aluminium hydroxide (abbreviated "ATH", also called aluminium trihydrate). In order to reduce their detrimental surface acidity or basicity and to improve compatibility with curable matrix materials, such fillers often are surface-coated, for example by organosilanes or stearates. For example, WO 2008/053355 describes a process for coating ATH particles using organosilanes or other coating agents. However, even with such a coating the fillers intrinsically increase the viscosity of the compositions significantly and therewith limit the possible maximum filler levels and thus the achievable thermally conductive properties of the compositions.

It remains desirable to obtain a chemically curable composition with exceptionally high possible content of thermally conductive fillers that however still exhibits a low enough viscosity for a useful application, showing high extrudability and high pumpability and thus excellent suitability as manually or automatically applied adhesive, gap filler, sealant, or potting resin especially for battery and electronics assembly.

### Summary of the invention

It is therefore an object of the present invention to provide a low viscosity and pumpable curable composition that exhibits high thermal conductivity, in particular of at least 1.5 W/mK according to ASTM D5470, and that hence is suitable as gap-filler, sealant, potting resin, or adhesive for thermal management in batteries and electronic equipment.
The present invention achieves these objects with the features of independent claim 1.

Further aspects of the invention are the subject of further independent claims. Particularly preferred embodiments of the invention are the subject of the dependent claims.

### Ways of executing the invention

The present invention relates in a first aspect to a chemically curable composition, comprising
- at least one chemically curable matrix **M;**
- more than 70 wt.-%, based on the total composition, of
   at least one thermally conductive filler **FI;**
- optionally additives, in particular selected from curing catalysts, accelerators, plasticizers, organosilanes, stabilizers, and colorants;
characterized in that said thermally conductive filler **FI** is surface-coated by silanzation using a mixture of at least one organosilane **OS1** according to R¹-Si(OR³)₃ and at least one organosilane **OS2** according to R²-Si(OR³)₃, wherein R¹ is a linear or branched C2 to C20 alkyl or alkenyl group optionally having cyclic and/or aromatic moieties, and wherein R² is a polyether group, and wherein R³ is a methyl or ethyl group, with the provisio that the mass ratio of organosilane **OS1** and organosilane **OS2** employed for the surface silanization coating is between 1:2 and 2:1, preferably between 1:1.5 and 1.5:1, in particular between 1:1.1 and 1.1:1.

In the present document, the term "chemically curable matrix" refers to a curable composition's matrix, also describable as plastic precursor material, which is liquid or pasty before curing and is able to cure by chemical reactions to a crosslinked, solid plastic material. In polymer science, such a material is often described as "thermoset" or "thermosetting plastic".
The term "matrix" describes the curable material contained in the composition according to this invention, including, for example, reactive polymers, reactive resins, crosslinking agents, and hardener agents that are all involved and used up in the chemical crosslinking reaction of any given composition according to this invention. The matrix by itself is able to produce a crosslinked, solid plastic after curing via its specific chemical curing mechanism. Fillers, plasticizers, catalysts, and other additives that are not chemically reacted into the formed crosslinked material during and after curing are not part of the chemically curable matrix. Thermoplastic materials that solidify only by physical processes (melting and re-solidification) but without chemical crosslinking reactions, for example polyolefins or non-reactive polyesters, are not a chemically curable matrix in the context of this invention.
The term "reactive silane group" refers to a silyl group that is bonded to an organic radical and has one to three, especially two or three, hydrolyzable substituents or hydroxyl groups on the silicon atom. Particularly useful hydrolyzable substituents are alkoxy groups. These silane groups are also referred to as "alkoxysilane groups". Reactive silane groups may also be in partly or fully hydrolyzed form, for example as silanols.
"Organofunctional compound" refers to a compound that contains a functional group that is bound via a carbon atom. For example, "aminofunctional compound" is a compound having an aminoalkyl group.

"Primary amino group" refers to an NH₂ group that is bonded to an organic radical, and "secondary amino group" refers to an NH group that is bonded to two organic radicals which may also together be part of a ring, and "tertiary amino group" refers to an N group that is bonded to three organic radicals, two or three of which together may also be part of one or more rings. Accordingly, "primary aminosilanes" are aminosilanes comprising a primary amino group and "secondary aminosilanes" are aminosilanes comprising a secondary amino group. The latter also encompasses compounds having both a primary and a secondary amino group.
The terms "polyether group", or synonymously "polyoxyalkylene group" refers to a linear or branched hydrocarbyl radical which contains ether groups and contains more than two repeat units of the (O-R) type in succession, where R is a linear or branched alkylene radical, as for example from the polyaddition of ethylene oxide or 1 ,2-propylene oxide onto starter molecules having two active hydrogen atoms.
Substance names beginning with "poly", such as polyol or polyisocyanate, refer to substances containing, in a formal sense, two or more of the functional groups that occur in their name per molecule.
The term "organic polymer" encompasses a collective of macromolecules that are chemically homogeneous but differ in relation to degree of polymerization, molar mass and chain length, which has been prepared by a poly reaction (polymerization, polyaddition, polycondensation) and has a majority of carbon atoms in the polymer backbone, and reaction products of such a collective of macromolecules. Polymers having a polyorganosiloxane backbone (commonly referred to as "silicones") are not organic polymers in the context of the present document.
The term "polyether containing reactive silane groups" also encompasses organic polymers which contain silane groups and which, in addition to polyether units, may also contain urethane groups, urea groups or thiourethane groups. Such polyethers containing reactive silane groups may also be referred to as "polyurethanes containing reactive silane groups".
"Molecular weight" is understood in the present document to mean the molar mass (in grams per mole) of a molecule or part of a molecule, also referred to as "radical". The term "radical" is used in this document in a formal sense, meaning a molecular rest bound to an atom by a covalent bond, while the bond is formally "cut" to describe the molecular rest attached to it. Molecular weight of polymers is understood as the average molecular weight of their chain length distribution. "Average molecular weight" is understood herein to mean the number-average Mₙ of an oligomeric or polymeric mixture of molecules or radicals, which is typically determined by means of gel permeation chromatography (GPC) against polystyrene as standard.
"Weight percent" or "percentage by weight", and its abbreviation "wt.-%" refer to the weight percentage of a certain compound in a total composition, if not otherwise defined. The terms "weight" and "mass" are used interchangeably in this document and refer to the mass as a property of a physical body and commonly measured in kilograms (kg).
"Storage-stable" or "storable" refers to a substance or composition when it can be stored at room temperature in a suitable container over a prolonged period, typically at least 3 months up to 6 months or more, without any change in its application or use properties, especially in the viscosity and crosslinking rate, to a degree of relevance for the use thereof as a result of the storage.
"Room temperature" refers to a temperature of 23°C.
"Thermal conductivity" is defined as ability of material to transmit heat and it is measured in watts per metre-kelvin (W/(m·K)), herein denoted as "W/mK". Thermal conductivity of materials disclosed in this document are measured according to ASTM D5470-06, if not otherwise specified.
All industrial standards and norms cited in this document refer to the respective edition in force on the time of filing of the first application of this invention, if not otherwise defined.
A dotted line in the formulae in this document in each case represents the bond between a substituent and the corresponding molecular radical.

### Chemically curable matrix M

The composition according to the present invention comprises at least one chemically curable matrix **M.** This chemically curable matrix is required for the composition to cure to a solid material, preferably a material with adequate mechanical and/or elastic properties.

In principle, all chemically curable materials based on chemically curing (thermosetting) polymers or resins are suitable for this purpose. The chemically curable matrix **M** should be liquid or pasty at room temperature, or at least become liquid or pasty upon heating, in order to be pumpable or applicable and, if in multi-component form, properly mixable.

In preferred embodiments of the chemically curable composition according to the invention, said chemically curable matrix **M** is selected from organic polymers having isocyanate groups, organic polymers having alkoxysilane groups, condensation-curable silicones, epoxy resins, (meth)acrylate resins, and combinations thereof.

In one preferred embodiment, said chemically curable matrix **M** is based on polymers having isocyanate groups, in particular polyethers having isocyanate groups, polyesters having isocyanate groups, polybutadienes having isocyanate groups, or polyurethanes having isocyanate groups.
Such compositions can cure by additionally using suitable hardeners, for example polyols, polyamines, or polysulfides. Alternatively, they can cure with water, either from air humidity or my admixing water. Reaction with water leading to curing of the material can involve hydrolysis of some of the isocyanate groups in the composition, thus forming amines in situ, or by reaction with latent, hydrolysable hardeners (for example aldimines or oxazolidines) additionally comprised in the composition.
Such compositions based on polymers having isocyanate groups can be formulated as one-component compositions (preferably containing, apart from the polymers having isocyanate groups, also latent hardeners), or they can be formulated as two-component compositions wherein the polymers having isocyanate groups and the hardeners (in particular polyols, polyamines, or polysulfides) are stored separately and mixed during application.

Compositions based on polymers having isocyanate groups are well known to the skilled person and they can be employed without special restrictions as chemically curable matrix **M.**

In another especially preferred embodiment, said chemically curable matrix **M** is based on organic polymers having alkoxysilane groups. Preferably, the organic polymer having alkoxysilane groups is liquid at room temperature, wherein the silane groups are especially dialkoxysilane groups and/or trialkoxysilane groups, more preferably trimethoxysilane groups, methyldimethoxysilane groups, or triethoxysilane groups.
Processes for preparing organic polymers having alkoxysilane groups are known to the person skilled in the art.
In a preferred process, organic polymers having alkoxysilane groups are obtainable from the reaction of organic polymers containing allyl groups with hydrosilanes, optionally with chain extension using, for example, diisocyanates. In a further preferred process, polyethers containing alkoxysilane groups are obtainable from the copolymerization of alkylene oxides and epoxysilanes, optionally with chain extension using, for example, diisocyanates.
In a further preferred process, organic polymers containing reactive silane groups are obtainable from the reaction of organic polyols with isocyanatosilanes, optionally with chain extension using diisocyanates.
In a further preferred process, polyethers containing alkoxysilane groups are obtainable from the reaction of organic polymers containing isocyanate groups, especially NCO-terminated urethane polymers from the reaction of polyols with a superstoichiometric amount of polyisocyanates, with aminosilanes, hydroxysilanes or mercaptosilanes.
Suitable organic polymers having alkoxysilane groups are commercially available products, especially the following: MS Polymer^{™} (from Kaneka Corp.; especially the S203H, S303H, S227, S810, MA903 and S943 products); MS Polymer^{™} or Silyl^{™} (from Kaneka Corp.; especially the SAT010, SAT030, SAT200, SAX350, SAX400, SAX725, MAX450, MAX951 products); Excestah^{®} (from Asahi Glass Co. Ltd.; especially the S2410, S2420, S3430, S3630 products); SPUR+* (from Momentive Performance Materials; especially the 1010LM, 1015LM, 1050MM products); Vorasil^{™} (from Dow Chemical Co.; especially the 602 and 604 products); Desmoseal^{®} (from Bayer MaterialScience AG; especially the S XP 2458, S XP 2636, S XP 2749, S XP 2774 and S XP 2821 products), TEGOPAC^{®} (from Evonik Industries AG; especially the Seal 100, Bond 150, Bond 250 products), Polymer ST (from Hanse Chemie AG/Evonik Industries AG, especially the 47, 48, 61, 61LV, 77, 80, 81 products); Geniosil^{®} (from Wacker Chemie AG; especially the STP-E10, STP-E15, STP-E30, STP-E35, WP1, and WP2 products). Furthermore, suitable is the silylated polyether available under the trade name Si-PolyU 5013 (from PolyU GmbH).
Compositions based on organic polymers having alkoxysilane groups can be formulated as one-component compositions that cure by exposure to air humidity, or, preferably, they can be formulated as two-component compositions, wherein the second component contains water in free or chemically accessible form.
Compositions based on polymers having alkoxysilane groups are well known to the skilled person and they can be employed without special restrictions as chemically curable matrix **M.**

In another preferred embodiment, said chemically curable matrix **M** is based on epoxy resins and suitable hardeners, in particular polyamines or polyanhydrides, preferably polyamines.
Compositions based on epoxy resins are widely known in the field of adhesives. The epoxy resins are preferably liquid epoxy resins. Suitable liquid epoxy resins include customary technical epoxy resins which are fluid at room temperature and have a glass transition temperature of below 25°C. They are obtained conventionally, more particularly from the glycidylization of compounds having at least two active hydrogen atoms, more particularly polyphenols, polyols or amines, by reaction with epichlorohydrin. Particularly preferred as liquid epoxy resins are diglycidyl ethers of bisphenol A or bisphenol F or bisphenol A/F, as are available commercially, for example, from Dow, Huntsman or Momentive.

As hardeners for epoxy resins, polyamines are preferred. Suitable as polyamines are in particular compounds or polymers with at least two amine hydrogens, including at least two primary and/or secondary amino groups. Among those, especially preferred are aliphatic and cycloalphatic polyamines, in particular diamines, and polyetheramines, in particular polyether diamines. Epoxy resin-based compositions are preferably formulated as two-component compositions, wherein the epoxy resin and the hardener are stored in separate containers and mixed during application.
Compositions based on epoxy resins are well known to the skilled person and they can be employed without special restrictions as chemically curable matrix **M.**

In another preferred embodiment, said chemically curable matrix **M** is based on condensation-curable silicones. Condensation-curable silicones, also known as room temperature-vulcanizing (RTV) silicones are well known in the field of sealants, adhesives, and coatings. Condensation-curable silicones can be formulated as one-component compositions (RTV-1) or as two-component compositions (RTV-2). RTV-1 silicones cure by moisture from air, similar to compositions based on organic polymers having alkoxysilane groups. RTV-1 silicones may be formulated using polydimethylsiloxane polymers having reactive silane groups, in particular with oxime groups or alkoxy groups on the reactive silane groups, mostly the polymer end groups. Preferred are polymers with alkoxysilane groups as end groups.
Another widely used possibility is the formulation as RTV-2 silicones. There, usually silanol-terminated polydimethylsiloxanes are contained in one component, while crosslinkers, mostly organoalkoxysilanes, are contained in the second component. Both RTV-1 and RTV-2 silicones are suitable for the compositions according to this invention, while RTV-2 silicones are preferred due to their faster and more controllable curing.
Compositions based on condensation-curable silicones both as RTV-1 and RTV-2 are well known to the skilled person and they can be employed without special restrictions as chemically curable matrix **M.**

In yet another preferred embodiment, said chemically curable matrix **M** is based on (meth)acrylate resins. In this embodiment, curing of the matrix takes place by radically polymerizing and/or crosslinking (meth)acrylate-functional monomers and/or polymers. Radical curing can be initiated using, e.g., UV irradiation or by thermally activating a radical initiator, such as a peroxide. All common (meth)acrylate monomers suitable for adhesives based on (meth)acrylates can be used in the composition according to the invention. Preferred are embodiments where (meth)acrylate-functional polymers, in particular polyurethane polymers having (meth)acrylate endgroups, are used, either alone or in combination with (meth)acrylate monomers. Use of such polymers enables cured materials with higher toughness and elasticity. (Meth)acrylate resin-based compositions are preferably formulated as two-component compositions, wherein the (meth)acrylate monomers and/or (meth)acrylate-functional polymers and the required radical initiator are stored in separate containers and mixed during application.
Compositions based on (meth)acrylate resins are well known to the skilled person and they can be employed without special restrictions as chemically curable matrix **M.**

In further embodiments, hybrid or dual-cure systems of the above or other chemically curable matrices are used as chemically curable matrix **M.**
One preferred such hybrid composition, which is another preferred embodiment, is a combination of an organic polymer having alkoxysilane groups, an epoxy resin, a polyamine hardener, and water. In this embodiment, the epoxy resin and the organic polymer having alkoxysilane groups are stored in the same first component of a two-component composition, while the polyamine hardener and water are stored in the same second component. Upon mixing of the two components, the organic polymer having alkoxysilane groups reacts with the water under condensation crosslinking, and the epoxy resin reacts with the polyamine under addition crosslinking. This yields a mechanically superior material that combines both advantages of epoxy resins (mechanical strength and stability) and of organic polymers having alkoxysilane groups (elasticity and adhesive properties).

In all preferred embodiments, the composition preferably comprises between 3 wt.-% and 25 wt.-%, preferably between 4 wt.-% and 20 wt.-%, in particular between 5 wt.-% and 15 wt.-%, based on the total composition, of said chemically curable matrix **M.**

In each preferred embodiment of said chemically curable matrix **M** is is possible and might be advantageous to include further additives to the respective composition which are customarily used in the respective technological field. Such additives include, for example, plasticizers, curing catalysts, adhesion promoters, stabilizers, and reactive diluents. The skilled person knows which types of these additives are especially suitable for each given chemically curable matrix **M.** Further below some common examples that are suitable for most or all chemically curable matrices are described.

### Thermally conductive filler FI

The composition according to the present invention comprises more than 70 wt.-%, based on the total composition, of at least one thermally conductive filler **Fl.**

Preferably, the composition comprises up to 95 wt.-%, in particular up to 92 wt.-%, preferably between 75 wt.-% and 90 wt.-%, more preferably between 80 wt.-% and 85 wt.-%, based on the total composition, of said thermally conductive filler **FI.**

The thermally conductive filler **FI** is not particularly limited.
Suitable thermally conductive fillers are in particular those that have a coefficient of thermal conductivity that is greater than 5 W/mK, preferably greater than 10 W/mK, more preferably greater than 15 W/mK.
Examples of thermally conductive fillers include alumina, alumina trihydrate or aluminum trihydroxide, aluminium nitride, magnesium oxide, magnesium hydroxide, silicon carbide, boron nitride, zinc oxide, aluminosilicate, diamond, and graphite, or mixtures thereof. Particularly preferred are metal oxides and metal hydroxides, in particular aluminium trihydroxide (ATH), and aluminium oxide, with ATH being the most preferred.

In preferred embodiments, said thermally conductive filler **FI** is selected from aluminium oxide, aluminium hydroxide, aluminium nitride, magnesium oxide, magnesium hydroxide, boron nitride, zinc oxide, silver, copper, aluminium, aluminosilicate, graphite, and any mixture thereof, preferably from aluminium oxide and/or aluminium hydroxide.

The filler **FI** should be in powder form or at least particulate, in order to ensure homogeneous compounding in its high amounts.

In a preferred embodiment, the thermally conductive filler **FI** has a broad particle size distribution characterized by a ratio of D90/D50 of at or about 3 or more. Particularly preferably the thermally conductive filler is ATH or aluminium oxide having a broad particle size distribution characterized by a ratio of D90/D50 of at or about 3 or more, most preferably ATH. Also preferred are thermally conductive fillers having a bimodal particle size distribution. A bimodal distribution is when, for example, the ratio D90/D50 is at or about 3 or more, more preferably at or about 5 or more, more particularly preferably at or about 9 or more. For example, particles having a D50 of 5 to 20 microns and a D90 of 70 to 90 microns, particularly a D50 of 7-9 microns and a D90 of 78-82 microns. Particle size can be determined using laser diffraction, in particular using the method disclosed in WO 2008/053355 (paragraph [0036]). Preferred are aluminium oxide and ATH having a bimodal distribution, particularly ATH.

In a preferred embodiment of the moisture-curable composition according to present invention, the filler **FI** comprises or consists of aluminium oxide and aluminium hydroxide. This combination has the advantage that it shows especially good thermal conductivity and at the same time excellent flame-retardant properties. This makes it especially suitable for battery assemblies.

It is preferred in some embodiments to use more than one type of filler FI, for example aluminium oxide and aluminium hydroxide, with different particle sizes. For example, it is advantageous to use a bimodal or multimodal particle size range for the employed fillers. When at least one filler with relatively large particles and at least another one with relatively small particles are used together, a higher density of close packing of spheres may be achieved, which is beneficial for heat conductivity and compounding, especially when using small amounts, within the suitable ranges, of chemically curable matrix **M** and high amounts of filler **Fl.**

The thermally conductive filler **FI** is preferably present in the final adhesive at a concentration that gives a thermal conductivity of at or about 1.5 W/mK or more, preferably at or about 2.0 or more, more preferably at or about 2.5 or more.

The thermally conductive filler **FI** is surface-coated by silanzation using a mixture of at least one organosilane **OS1** according to R¹-Si(OR³)₃ and at least one organosilane **OS2** according to R²-Si(OR³)₃, wherein R¹ is a linear or branched C2 to C20 alkyl or alkenyl group optionally having cyclic and/or aromatic moieties, and wherein R² is a polyether group, and wherein R³ is a methyl or ethyl group, with the provisio that the mass ratio of organosilane **OS1** and organosilane **OS2** employed for the surface silanization coating is between 1:2 and 2:1, preferably between 1:1.5 and 1.5:1, in particular between 1:1.1 and 1.1:1, most preferably about 1:1.

In preferred embodiments, R¹ of said organosilane **OS1** is selected from linear or branched C8 to C18 alkyl groups, in particular linear or branched C8 to C16 alkyl groups.
Suitable and preferred organosilanes **OS1** include alkyl- and aryltrimethoxy and -triethoxysilanes, in particular -trimethoxysilanes, for example phenyltrimethoxysilane, propyltrimethoxysilane, octyltrimethoxysilane, decyltrimethoxysilane, dodecyltrimethoxysilane, pentadecyltrimethoxysilane, and hexadecyltrimethoxysilane, as well as the analogous triethoxysilanes with the same organic groups. Most preferred are pentadecyltrimethoxysilane, and hexadecyltrimethoxysilane.

In the same or other preferred embodiments, R² of said organosilane **OS2** is a polyethylene glycol) group.
Suitable and preferred organosilanes **OS2** include polyethylene glycol) trimethoxysilanes, for example Dynasylan^{®} 4148, Dynasylan^{®} 4144, and Dynasylan^{®} 4150 from Evonik.

In the same or other preferred embodiments, R³ of said organosilane **OS2** and/or said organosilane **OS1** is a methyl group, preferably in both of said organosilanes **OS1** and **OS2.**

In order to produce such a coating, any standard surface-coating method by silanaization using organosilanes can be used. Preferred, however, are the processes taught in WO 2008/053355, in particular the processes defined in [0007] and [0009] of said publication.
The surface-coating process involves mill-drying of filler particles, in particular ATH, comprising mill drying a slurry comprising in the range of from about 1 to about 85 wt.% filler particles, in particular ATH, based on the slurry, in the presence of a surface coating agent consisting of a mixture of at least one organosilane **OS1** and at least one organosilane **OS2** as specified above, thereby producing coated, mill-dried filler **FI** particles, in particular ATH.

The amount of mixture of at least one organosilane **OS1** and at least one organosilane **OS2** used for surface-coating of filler **FI** is preferably selected such that at least more than 50% of the surface of the filler **FI** particles are coated, preferably at least 75%, in particular 100% of the surface of the filler **FI** particles are coated by the resulting silane coating. It is also possible to use an excess of mixture of at least one organosilane **OS1** and at least one organosilane **OS2,** in particular up to 150% of the theoretical amount of organoosilane mixture required for a full coating of the surface. Excess organosilanes normally react by forming thicker silane coating layers on the filler **FI** particle surface.

In preferred embodiments, the amount of mixture of at least one organosilane **OS1** and at least one organosilane **OS2** used for surface-coating of filler **FI** is between 2.5 mg and 8 mg, preferably between 3 and 7.5 mg, in particular between 4 and 6.5 mg of said mixture of organosilane **OS1** and organosilane **OS2** per m² of the BET specific surface area of filler **Fl.** Such an amount range produces an optimal surface coating.
The BET specific surface area, as determined by DIN-66132, refers to the BET specific surface area of the uncoated filler **FI** particles.

In case of a two-component composition that consists of two individual components **A** and **B** that are stored in separated containers and mixed before or during applications to yield the fully mixed curable composition, filler **FI** may be present in component **A,** in component **B,** or, preferably, in both components **A** and **B.** In a preferred embodiment thermally conductive filler **FI** is present in in both components **A** and **B,** as this reduces the amount of mixing required to properly distribute the thermally conductive filler **FI** within the composition when components **A** and **B** are mixed. Furthermore, this allows for a broader range of mixing ratios between the components while ensuring a sufficiently high amount of filler **FI** within the composition.

### Plasticizer

The chemically curable composition according to the present invention preferably comprises at least one plasticizer. The composition may be formulated without plasticizer, but it is preferred that small amounts (e.g., from 1 wt.-% up to 10 wt.-%, 12 wt.-%, or 15 wt.-%, based on the total composition) of plasticizer are used for ease of compounding and resulting application and mechanical properties.
Preferably, the composition additionally comprises between 1.5 wt.-% and 12.5 wt.-%, in particular between 2.5 wt.-% and 10 wt.-%, preferably between 3 wt.-% and 9 wt.-%, in particular between 4 wt.-% and 8 wt.-%, based on the total composition, of at least one plasticizer.

Plasticizers are widely used and well known in the field of chemically curable compositions, and the skilled person knows which types of plasticizers can be used with which class of chemically curable matrix **M.**

The plasticizer may be any of the plasticizers commonly used in chemically curable compositions. These include, for example, carboxylic esters such as phthalates, diesters of ortho-cyclohexane-dicarboxylic acid, adipates, azelates, sebacates, glycol ethers, glycol esters, organic phosphoric or sulfonic esters, sulfonamides, polybutenes, or fatty acid methyl or ethyl esters derived from natural fats or oils, also called "biodiesel".

Furthermore suitable are polymeric plasticizers. These have the advantage of lower migration tendency into surrounding areas and lower contribution to VOC levels.
The term "polymeric plasticizer" herein means a polymeric additive that is liquid at room temperature and preferably contains no groups that are reactive with the chemically curable matrix **M.** In contrast to traditional plasticizers, such as phthalates, the polymeric plasticizers generally have a higher molecular weight. Preferably, the polymeric plasticizer has an average molecular weight Mₙ of 500 to 12'000 g/mol, in particular 1'000 to 10'000 g/mol, more preferably 2'500 to 5'000 g/mol.

Preferred plasticizers are low molecular weight diesters of polyether diols, in particular tri(ethylenglycol)bis-2-ethylhexanoate, which is available under the trade name Eastman^{®} TEG-EH by Eastman.

Further preferred plasticizers for the chemically curable composition according to the present invention comprise or consist of a trialkyl and/or triaryl phosphate. Preferred trialkyl and/or triaryl phosphate plasticizers are tris-(2-ethylhexyl)-phosphate (sold under the trade name Disflamoll^{®} TOF by Lanxess), cresyl diphenyl phosphate, tricresyl phosphate, and triphenyl phosphate (all sold under the trade name range Disflamoll^{®} by Lanxess). Trialkyl and/or triaryl phosphate plasticizers have the advantage that they improve the flame-retardant properties of the composition.

Plasticizers may be present, in case of a two-component composition, in one or both components of the two-component chemically curable composition according to the invention. Preferably, plasticizers are present in both components of two-component embodiments of the present invention, especially if filler **FI** is also present, as plasticzer facilitates a homogeneous compounding of highly filled components.

### Dispersion additive

In some embodiments, the chemically curable composition furthermore may comprise at least one dispersion additive. Dispersion additives are well known in the field of coating formulations containing fillers and pigments. They are also known as dispersants or wetting agents and facilitate the compounding of solids into a liquid matrix. In the context of the present invention, a dispersion additive may facilitate incorporation of very high amounts (i.e., more than 85 wt.-% based on the total composition, or higher) of filler **FI** within the composition. In principle all common dispersion additives are suitable, and their suitable amount for a given formulation depends on the type of dispersion additive and relative amount of filler **FI** and other constituents, such as chemically curable matrix **M.** In preferred embodiments, the composition comprises said dispersion additive with an amount of between 0 and 5.0 wt.-%, preferably between 0.5 and 4.0 wt.-%, in particular between 1.0 and 3.0 wt.-%, based on the total composition.

An especially preferred dispersion additive is an ammonium salt or alkyl ammonium salt of a polymer or compolymer containing carboxylate and/or phosphate groups, preferably a polyether and/or polyester polymer containing carboxylate and/or phosphate groups.

Suitable such dispersion additives are, for example, Byk-W 996, Byk-W 969, Byk-W 985 (available from Altana) and Disparlon DA-234, DA-325, and DA-375 (available from King Industries).

### Organosilanes

The chemically curable composition according to the present invention furthermore may comprise organosilanes or oligomers of organosilanes, in particular monomeric or oligomeric organofunctional alkoxysilanes, similar to oganosilanes **OS1** and **OS2** mentioned above. Organosilanes are especially useful in compositions where the chemically curable matrix **M** is based on organic polymers having alkoxysilane groups or condensation-curable silicone polymers. However, also with other chemcically curable matrices **M,** for example based on polyurethane polymers having isocyanate groups or epoxy resins, additional organosilanes may be useful.
Preferably, the composition comprises between 0.1 wt.-% and 2.5 wt.-%, preferably between 0.2 wt.-% and 1.5 wt.-%, preferably between 0.25 wt.-% and 1.0 wt.-%, in particular between 0.5 wt.-% and 0.75 wt.-%, based on the total composition, of organosilanes or oligomers of organosilanes, in particular comprising or consisting of aminosilanes or oligomers thereof.

Organosilanes have various advantages. For example, they may act as desciccant or drying agent, in particular vinyl trimethoxysilane, phenyl trimethoxysilane and/or propyl trimethoxysilane.

Other organosilanes have co-catalytic activity, in particular aminosilanes such as 3-aminopropyl trimethoxysilane in case a chemically curable matrix **M** based on organic polymers having alkoxysilane groups or condensation curable silicone polymers is employed, and/or they act as adhesion promotors, such as 3-glycidoxypropyl trimethoxysilane.
Preferred organosilanes acting, for example, as adhesion promoters and/or crosslinkers are in particular aminosilanes, mercaptosilanes, epoxysilanes, (meth)acryloylsilanes, anhydridosilanes, carbamatosilanes, alkylsilanes or iminosilanes, oligomeric forms of these silanes, adducts formed from primary aminosilanes with epoxysilanes or (meth)acryloylsilanes or anhydridosilanes, amino-functional alkylsilsesquioxanes, 3-glycidoxypropyltrimethoxysilane, 3-glycidoxypropyltriethoxysilane or 3-ureidopropyltrimethoxysilane, or oligomeric forms of these silanes.

### Accelerators and catalysts

Depending on the employed chemically curable matrix **M,** it might be advantageous to add a suitable curing catalyst and/or accelerator. Such additives can significantly accelerate the curing of the chemically curable matrix **M** and/or enable curing at lower temperatures.
Accelerators and catalysts are well known in the field of curable compositions. Common are, for example, acidic or alkaline substances or metalorganic compounds. There is no specific limitation regarding the use of accelerators and catalysts.

The chemically curable composition thus preferably comprises an accelerator or catalyst for the curing of chemically curable matrix **M,** in particular with an amount of between 0.005 wt.-% and 1.5 wt.-%, preferably between 0.01 wt.-% and 1.0 wt.-%, more preferably between 0.025 wt.-% and 0.75 wt.-% based on the total composition.

### Further additives

The multi-component composition may comprise further constituents, especially the following auxiliaries and additives:
- additional desiccants or drying agents, especially orthoformic esters, calcium oxide or molecular sieves;
- reactive plasticizers and diluents;
- solvents;
- further inorganic or organic fillers, especially baryte (heavy spar), talcs, quartz flours, quartz sand, dolomites, chalk, wollastonites, kaolins, calcined kaolins, mica (potassium aluminum silicate), molecular sieves, magnesium hydroxide, silicas including finely divided silicas from pyrolysis processes, industrially produced carbon blacks, metal powders such as iron or steel, PVC powder or hollow spheres;
- fibers, especially glass fibers, carbon fibers, metal fibers, ceramic fibers or polymer fibers such as polyamide fibers or polyethylene fibers;
- dyes;
- pigments, especially titanium dioxide or iron oxides;
- rheology modifiers, in particular thickeners or thixotropy additives, especially sheet silicates such as bentonites, derivatives of castor oil, hydrogenated castor oil, polyamides, polyurethanes, urea compounds, fumed (pyrogenic) silicas, cellulose ethers or hydrophobically modified polyoxyethylenes;
- stabilizers against oxidation, heat, light or UV radiation;
- natural resins, fats or oils such as rosin, shellac, linseed oil, castor oil or soybean oil;
- non-reactive polymers that are preferably solid at room temperature such as, in particular, homo- or copolymers of unsaturated monomers, especially from the group comprising ethylene, propylene, butylene, isobutylene, isoprene, vinyl acetate or alkyl (meth)acrylates, especially polyethylenes (PE), polypropylenes (PP), polyisobutylenes, ethylene-vinyl acetate copolymers (EVA) or atactic poly-α-olefins (APAO), polyesters, and polycarbonates;
- flame-retardant substances, especially the already mentioned filler aluminum hydroxide, magnesium hydroxide, or, in particular, the already mentioned organic phosphoric esters, bisphenol A bis(diphenyl phosphate) or ammonium polyphosphates;
- surface-active substances, especially leveling agents, deaerating agents or defoamers;
- biocides, especially algicides, fungicides or substances that inhibit fungal growth;
and other substances customarily used in chemically curable compositions.

The composition is preferably produced and stored with exclusion of moisture and other undesired environmental influences and pollutants.

Preferably, the composition is a multi-component, especially two-component, composition.

In the present document, "two-component" refers to a composition in which the constituents of the composition are present in two different components which are stored in separate containers. Only shortly before or during the application of the composition are the two components mixed with one another, whereupon chemically curable matrix **M** in the mixed composition cures spontaneously or upon heating.

In preferred embodiments of the chemically composition according to the present invention, the composition a two-component composition that consists of two individual components **A** and **B** that are stored in separated containers and mixed before or during application to yield the fully mixed curable composition, wherein component **A** and component **B** each contain parts of the chemically curable matrix **M** that are chemically unreactive within their respective component **A** or **B** but spontaneously react with each other, optionally under the influence of heat or UV-irradiation, when the components **A** and **B** are mixed.

In preferred embodiments of a two-component chemically curable composition according to the present invention, said component **A** contains an organic polymer having alkoxysilane groups and said component **B** contains water.

In the same or other preferred embodiments of a two-component chemically curable composition according to the present invention, said component **A** contains an epoxy resin and said component **B** contains a polyamine.

In other preferred embodiments of a two-component chemically curable composition according to the present invention, said component **A** contains an organic polymer having isocyanate groups and said component **B** contains a polyol and/or a polyamine.

A preferred volumetric mixing ratio of component **A** to component **B** for two-component embodiments of the composition according to the present invention is between 1:2 and 2:1, preferably between 1:1.5 and 1.5:1, in particular between 1:1.2 and 1.2:1, most preferably 1:1. Such a mixing ratio enables especially accurate pumping and mixing of both components, especially when done automatically.

The chemically curable composition according to the present invention is preferably applied at ambient temperature, such as room temperature, preferably within a temperature range between 0°C and 45°C, especially 5°C to 35°C, and cures under these conditions. However, it can also cure in an accelerated manner at temperatures up to 80°C.
On application, the crosslinking reaction reactive groups of chemically curable matrix **M** commences, if appropriate under the influence of external factors such as moisture, heat, or irradiation. As a result of these reactions, the composition ultimately cures. The catalysts and accelerators described further above may accelerate this curing mechanism catalytically.

The chemically curable composition according to the invention is in principle suitable for a multitude of uses, for example as a molding, elastomer, film or membrane, as a potting compound, sealant, gap filler, adhesive, covering, or coating for construction and industrial applications, for example as a seam seal, cavity seal, electrical insulation compound, assembly adhesive, bodywork adhesive, seal, or gap filler. The composition is particularly suitable as an adhesive, gap filler, potting resin, and/or sealant, especially in automotive manufacturing, for batteries, electronic elements, engine control units, anti-lock breaking and electronic stability control and safety systems, AC/DC converters of hybrid electric vehicles, advanced driver-assistance systems, sensors, or control units.

For an application as adhesive, gap filler, or sealant, the composition preferably has a liquid or pasty consistency with structurally viscous properties. Such a pasty sealant or adhesive is especially applied to a substrate from standard cartridges which are operated manually, by means of compressed air or with a battery, or from a vat or hobbock by means of a delivery pump or an extruder, optionally by means of an application robot.

On application, the composition is preferably applied to at least one substrate. Suitable substrates are especially glass, glass ceramic, metals and alloys, polymer composites, plastics, fiber-reinforced plastics, electrocoated (e-coat) surfaces coated by electrophoretic painting processes, paints or varnishes, electrically isolating foils (such as PET foils) and dielectric castings.

If required, the substrates can be pretreated prior to the application of the composition, especially by chemical and/or physical cleaning methods or by the application of an adhesion promoter, an adhesion promoter solution or a primer.

The compositions disclosed herein possess in preferred embodiments excellent thermal conductivity, in particular of ≥ 1.5 W/mK, in preferred embodiments of ≥ 2.0 W/mK, according to ASTM D5470. Other preferred embodiments may have lower thermal conductivity, but instead have higher mechanical properties, e.g., tensile strength and elongation at break.

The compositions disclosed herein generally possess low viscosities and low extrusion forces of less than 1000 N, in particular less than 800 N, more preferably less than 600 N when extruded through a nozzle with an inner diameter of 3 mm according to the measurement specified in the experimental section below.

Another aspect of the present invention is the use of a chemically curable composition as described herein to adhesively bond, coat, or seal substrates or as a filler or potting resin for hollow bodies.

In preferred embodiments of said use, at least one of the substrates or hollow bodies is part of a battery or an electronic device.

This use of the composition gives rise to an article that was bonded, sealed, filled, or coated with the composition according to the invention. The article is especially a built structure, especially a structure built by structural engineering or civil engineering, an industrially manufactured good or a consumable good, especially a domestic appliance or a mode of transport such as, more particularly, an automobile, a bus, a truck, a rail vehicle, a ship, an aircraft, a drone, or a helicopter; or the article may be an installable component thereof, in particulate a battery box or electronic part.

Another aspect of the present invention is thus a substrate, adhesively sealed, coated, or bonded by a cured composition described herein, as well as a hollow body filled with a cured multi-component composition described herein.

### Examples

Adduced hereinafter are working examples which are intended to elucidate the invention described in detail. It will be appreciated that the invention is not restricted to these described working examples.

The term "standard climatic conditions" refers to a temperature of 23±1 °C and a relative air humidity of 50±5%.

### Test methods:

The **extrusion force,** i.e., the force required to squeeze a composition out of a cartridge, was determined as a measure of the processability or applicability of the composition. A low extrusion force stands for good processability or applicability.

The extrusion force was determined at 23°C after storage of the freshly prepared test composition during 7 days at 23°C in the sealed container (catrtridge). The extrusion force was measured using a squeezing device (Zwick/Roell Z005) by screwing a nozzle with an inner diameter of 3 mm onto the cartridge and then measuring the force required to squeeze the composition through the nozzle at a squeezing speed of 60 mm/min. The value given is an average of the forces measured after extruding a bead of 22 mm, 24 mm, 26 mm and 28 mm length. Values below 800 N are considered sufficient for a facile application.

### Compounds used:

**Table 1: Compounds used for the example compositions.**

| **Name** | **Description, trade name** |
|---|---|
| STP-E15 | Polyether polymer having trimethoxysilylpropyl-carbamate end groups (Geniosil^{®} STP-E15, Wacker) |
| Organosilane 1 (Organosilane **OS1**) | n-Hexadecyltrimethoxysilane (Falcone^{®} CG-N1613, Falcone Specialties) |
| Organosilane 2 (Organosilane **OS2**) | Polyethylene glycol)trimethoxysilane (Dynasylan^{®} 4148, Evonik) plus 4144, 4150 |
| Organosilane 3 | Vinyltrimethoxysilane (Dynasylan^{®} VTMO, Evonik) |
| Organosilane 4 | 3-Aminopropyltrimethoxysilane (Dynasylan^{®} 1110, Evonik) |
| TOF (plasticizer) | Tris-(2-Ethylhexyl)-phosphate (Disflamoll^{®} TOF, Lanxess) |
| ATH (uncoated) | Aluminium hydroxide (Al(OH)₃), uncoated, with bimodal particle size distribution (medial particle size D50 = 18 µm), BET surface area = 1.5 m²/g. |
| Water | Deionized water |
| DBTDL (catalyst) | Dibutyltin(IV) dilaurate |

### Preparation of coated ATH fillers

A series of coated ATH fillers was prepared using ATH (uncoated) and organosilane 1 and organosilane 2, respectively (see Table 1 for details on the raw materials). The process for preparing the coated ATH fillers was performed according to the method in Example 1 of WO 2008/053355 (paragraph [0049]), however using an ATH with a medial particle size D50 = 18 µm and a BET surface area of 1.5 m²/g. The organosilane(s) used for coating and their respective amount for each experiment are shown in Table 2.

**Table 2: Prepared coated ATH fillers. * not according to invention. **based on the weight amount of uncoated ATH used in the preparation.**

| **ATH (coated)** | **Organosilanes used (amount**)** |
|---|---|
| ATH-1 (coated)* | Organosilane 1 (0.39357%) |
| ATH-2 (coated)* | Organosilane 1 (0.7875%) |
| ATH-3 (coated)* | Organosilane 2 (0.39357%) |
| ATH-4 (coated)* | Organosilane 2 (0.7875%) |
| ATH-5 (coated) | 1:1 mixture (weight) of organosilane 1 and organosilane 2 (0.7875%) |

### Example compositions:

A series of two example compositions **A** and **B** were prepared using uncoated ATH and each of the coated ATH fillers shown in Table 2. These example compositions depict realistic two-component curable compositions based on silane-terminated polymers and are suitable as adhesives for industrial assembly operations such as battery bonding. Since both of components **A** and **B** in each such composition should be easily pumpable and mixable with each other (e.g., by static mixers), they ought to require low extrusion forces individually.

This example series of example two-component compositions was prepared by mixing the ingredients of each respective component **A** and **B** shown in Table 3 (components **A**) and Table 4 (components **B**) in the indicated sequence as listed in the table under nitrogen atmosphere in a vacuum mixer until homogeneous pastes were obtained (where possible). The individual components **A** and **B** were filled into internally coated aluminum spreading piston cartridges that were closed airtight and stored under standard climate conditions for at least 24 h until the testing protocol (e.g, extrudability) was employed (see above for details). For testing of the applicability, the respective components **A** and **B** of the compositions were tested regarding extrusion force, as detailed above.

The results of these measurements are shown in Table 5.

**Table 3: Example compositions components A (all numbers in wt.-%, based on the total individual composition A).**

| **Composition (components A)** | **C1-A** (Ref.) | **C2-A** (Ref.) | **C3-A** (Ref.) | **C4-A** (Ref.) | **C5-A** (Ref.) | **C6-A** |
|---|---|---|---|---|---|---|
| STP-E15 | 12.5 | 12.5 | 12.5 | 12.5 | 12.5 | 12.5 |
| TOF (plasticizer) | 4.5 | 4.5 | 4.5 | 4.5 | 4.5 | 4.5 |
| Organosilane 3 | 2.0 | 2.0 | 2.0 | 2.0 | 2.0 | 2.0 |
| ATH (uncoated) | 79.0 | - | - | - | - | - |
| ATH-1 (coated) | - | 79.0 | - | - | - | - |
| ATH-2 (coated) | - | - | 79.0 | - | - | - |
| ATH-3 (coated) | - | - | - | 79.0 | - | - |
| ATH-4 (coated) | - | - | - | - | 79.0 | - |
| ATH-5 (coated) | - | - | - | - | - | 79.0 |
| Organosilane 4 | 2.0 | 2.0 | 2.0 | 2.0 | 2.0 | 2.0 |

**Table 4: Example compositions components B (all numbers in wt.-%, based on the total individual composition B).**

| **Composition (components B)** | **C1-B** (Ref.) | **C2-B** (Ref.) | **C3-B** (Ref.) | **C4-B** (Ref.) | **C5-B** (Ref.) | **C6-B** |
|---|---|---|---|---|---|---|
| TOF (plasticizer) | 9.9 | 9.9 | 9.9 | 9.9 | 9.9 | 9.9 |
| Water | 2.0 | 2.0 | 2.0 | 2.0 | 2.0 | 2.0 |
| ATH (uncoated) | 88.0 | - | - | - | - | - |
| ATH-1 (coated) | - | 88.0 | - | - | - | - |
| ATH-2 (coated) | - | - | 88.0 | - | - | - |
| ATH-3 (coated) | - | - | - | 88.0 | - | - |
| ATH-4 (coated) | - | - | - | - | 88.0 | - |
| ATH-5 (coated) | - | - | - | - | - | 88.0 |
| DBTDL (catalyst) | 0.1 | 0.1 | 0.1 | 0.1 | 0.1 | 0.1 |

**Table 5: Extrusion force measured for respective components A and B of example compositions. "solid." means that this sample could not be measured as it only constituted a powdery, lumpy solid mass.**

| **Composition (components A)** | **C1-A** (Ref.) | **C2-A** (Ref.) | **C3-A** (Ref.) | **C4-A** (Ref.) | **C5-A** (Ref.) | **C6-A** |
|---|---|---|---|---|---|---|
| Extrusion force [N] | 1154 | 954 | 1117 | 883 | 867 | 715 |
| | | | | | | |

| **Composition (components B)** | **C1-B** (Ref.) | **C2-B** (Ref.) | **C3-B** (Ref.) | **C4-B** (Ref.) | **C5-B** (Ref.) | **C6-B** |
|---|---|---|---|---|---|---|
| Extrusion force [N] | *solid.* | 661 | 563 | *solid.* | *solid.* | 500 |

Table 5 shows that for both component **A** and **B,** using a coated ATH filler according to the invention (ATH-5 for C6-A and C6-B) leads to lower extrusion forces than using the same ATH uncoated (C1-A and C1-B) or with a coating not according to the invention. It is especially surprising that a mixed coating according to the invention (C6-A and C6-B) exhibits a significantly lower extrusion force than a coating of the same amount (extent) but only using one of the organosilanes used in the mixture (C3-A and C3-B, C5-A and C5-B, respectively). This proves that there must be a synergistic effect arising from this mixture of organosilanes used for the coating, which cannot be attained by using either one of the organosilanes alone.

With this significantly lower extrusion force for both components C6-A and C6-B compared to components containing the same amount of uncoated or otherwise coated ATH filler, the inventive example shows its superiority in terms of easier applicability and/or higher thermal conductivity (as higher filler levels are accessible while extrusion forces remain acceptable). Hence, it can improve the existing curable composition technology suitable for thermal management in industrially produced products.

## Claims

1. A chemically curable composition, comprising
- at least one chemically curable matrix **M;**
- more than 70 wt.-%, based on the total composition, of at least one thermally conductive filler **FI**;
- optionally additives, in particular selected from curing catalysts, accelerators, plasticizers, organosilanes, stabilizers, and colorants;
**characterized in that** said thermally conductive filler **FI** is surface-coated by silanzation using a mixture of at least one organosilane **OS1** according to R¹-Si(OR³)₃ and at least one organosilane **OS2** according to R²-Si(OR³)₃, wherein R¹ is a linear or branched C2 to C20 alkyl or alkenyl group optionally having cyclic and/or aromatic moieties, and wherein R² is a polyether group, and wherein R³ is a methyl or ethyl group, with the provisio that the mass ratio of organosilane **OS1** and organosilane **OS2** employed for the surface silanization coating is between 1:2 and 2:1, preferably between 1:1.5 and 1.5:1, in particular between 1:1.1 and 1.1:1.

2. The chemically curable composition as claimed in claim 1, **characterized in that** said thermally conductive filler **FI** is selected from aluminium oxide, aluminium hydroxide, aluminium nitride, magnesium oxide, magnesium hydroxide, boron nitride, zinc oxide, silver, copper, aluminium, aluminosilicate, graphite, and any mixture thereof, preferably from aluminium oxide and/or aluminium hydroxide.

3. The chemically curable composition as claimed in claim 1 or 2, **characterized in that** R¹ of said organosilane **OS1** is selected from linear or branched C8 to C16 alkyl groups.

4. The chemically curable composition as claimed in any of claims 1 to 3, **characterized in that** R² of said organosilane **OS2** is a polyethylene glycol) group.

5. The chemically curable composition as claimed in any of claims 1 to 4, **characterized in that** the amount of mixture of at least one organosilane **OS1** and at least one organosilane **OS2** used for surface-coating of filler **FI** is between 2.5 mg and 8 mg, preferably between 3 and 7.5 mg, in particular between 4 and 6.5 mg of said mixture of organosilane **OS1** and organosilane **OS2** per m² of the BET specific surface area of filler **FI.**

6. The chemically curable composition as claimed in any of claims 1 to 5, **characterized in that** said chemically curable matrix **M** is selected from organic polymers having isocyanate groups, organic polymers having alkoxysilane groups, condensation-curable silicones, epoxy resins, (meth)acrylate resins, and combinations thereof.

7. The chemically curable composition as claimed in any of claims 1 to 5, **characterized in that** the composition a two-component composition that consists of two individual components **A** and **B** that are stored in separated containers and mixed before or during application to yield the fully mixed curable composition, wherein component **A** and component **B** each contain parts of the chemically curable matrix **M** that are chemically unreactive within their respective component **A** or **B** but spontaneously react with each other, optionally under the influence of heat or UV-irradiation, when the components **A** and **B** are mixed.

8. The chemically curable composition as claimed in claim 7, **characterized in that** said component **A** contains an organic polymer having alkoxysilane groups and said component **B** contains water.

9. The chemically curable composition as claimed in claim 7, **characterized in that** said component **A** contains an organic polymer having isocyanate groups and said component **B** contains a polyol and/or a polyamine.

10. The chemically curable composition as claimed in any of claims 7 or 8, **characterized in that** said component **A** contains an epoxy resin and said component **B** contains a polyamine.

11. The chemically curable composition as claimed in any of claims 1 to 10, **characterized in that** the composition comprises up to 95 wt.-%, preferably between 75 wt.-% and 90 wt.-%, based on the total composition, of said thermally conductive filler **FI.**

12. The chemically curable composition as claimed in any of claims 1 to 11, **characterized in that** the composition furthermore contains a plasticizer, wherein said plasticizer preferably comprises or consists of a trialkyl and/or triaryl phosphate.

13. The chemically curable composition as claimed in any of claims 1 to 12, **characterized in that** that the composition furthermore contains a curing catalyst and/or accelerator for curing of the chemically curable matrix **M.**

14. Use of a multi-component curable composition according to any of claims 1 to 13 to adhesively bond, coat, or seal substrates or as a filler or potting resin for hollow bodies.

15. The use according to claim 14, **characterized in that** at least one of the substrates or hollow bodies is part of a battery or an electronic device.
